# FASCICULE DE BREVET EUROPEEN

(11) **EP 4 291 935 B1**
(45) Date de publication et mention de la délivrance du brevet: **01.04.2026**
(21) Numéro de dépôt: 22704384.1
(22) Date de dépôt: 09.02.2022
(51) Int. Cl.: H04N 23/50, F41G 1/35, F41G 1/36, G01S 7/481, G01S 17/10, G01S 17/86, G01S 17/88, G02B 17/00, G02B 17/04, G02B 19/00, G02B 23/04, G02B 23/12, G02B 25/00, G02B 27/10

(54) **SYSTÈME ET PROCÉDÉ D'OBSERVATION ET PROCÉDÉ DE FABRICATION D'UN TEL SYSTÈME**
BEOBACHTUNGSSYSTEM UND -VERFAHREN, UND HERSTELLUNGSVERFAHREN EINES SOLCHEN SYSTEMS
OBSERVATION SYSTEM AND METHOD, AND PROCESS FOR MANUFACTURING SUCH A SYSTEM

(30) Priorité: 10.02.2021 FR 2101273
(43) Date de publication de la demande: 20.12.2023
(73) Titulaire: Bertin Technologies, 78180 Montigny-le-Bretonneux (FR)
(72) Inventeur: GRASSER, Régis, 13100 AIX-EN-PROVENCE (FR); LAPERE, Vincent, 13005 MARSEILLE (FR)
(74) Mandataire: Hautier IP
(86) Numéro de dépôt international: PCT/EP2022/053131
(87) Numéro de publication internationale: WO 2022/171672

(56) Documents cités:
- US-A1- 2018 180 734
- US-A1- 2020 386 869
- ANONYMOUS: "Good fiber-optic connections start with the ferrule", 1 February 2019 (2019-02-01), XP055854451, Retrieved from the Internet <URL:https://www.cablinginstall.com/connectivity/fiber-optic/article/16466576/america-islintech-a-ucl-swift-co-good-fiberoptic-connections-start-with-the-ferrule> [retrieved on 20211025]

## Description

### DOMAINE TECHNIQUE DE L'INVENTION

La présente invention concerne l'observation d'une scène, et plus particulièrement une observation à l'aide d'un système portatif.

### ETAT DE LA TECHNIQUE

Actuellement, il existe des systèmes monoculaires, ou des jumelles, utilisés pour observer des scènes. Certains de ces systèmes peuvent être équipés d'un pointeur laser, c'est-à-dire un appareil pour illuminer une scène par un point laser dans une longueur d'onde du domaine du visible ou dans une longueur d'onde du proche infrarouge pour être facilement détectable par les jumelles de vision nocturne..

D'autres systèmes peuvent être équipés d'un télémètre utilisant un rayonnement du domaine de l'infrarouge pour mesurer une distance entre la scène à observer et le système.

Par exemple, on peut citer le brevet américain US 10451716 B2, qui divulgue un système de mesure de distance à l'aide d'une télédétection par laser, ou LIDAR, c'est-à-dire « laser detection and ranging » en langue anglaise. On peut également citer la demande de brevet américain US2020/386869 qui divulgue un détecteur et estimateur de distance par laser à fibre optique.

On peut citer le brevet européen EP2637038 B1, qui divulgue un système de mesure de distance utilisant un rayonnement optique du type laser.

On peut en outre citer la demande internationale WO200663740 A1, qui divulgue un système de mesure de distance par rayonnement électromagnétique pulsé du type laser dans le domaine du visible.

Mais ces systèmes sont encombrants et peu adaptés lorsque, par exemple, l'utilisateur souhaite utiliser un système d'observation muni d'un appareil équipé d'un illuminateur tout en se déplaçant facilement.

On peut également citer la demande de brevet américain US2018/180734 qui divulgue un appareil d'observation comprenant deux canaux d'observation et deux canaux d'émission/réception d'un laser, pour viser une cible afin de déterminer la distance le long d'un axe. Mais un tel appareil n'est pas suffisamment robuste car les canaux d'observation et d'émission/réception laser peuvent ne plus être harmonisés, notamment lors de chocs ou de vibrations.

On peut en outre citer la demande de brevet US2020386869, qui divulgue un détecteur et estimateur de distance par laser à fibre optique, ainsi que la demande de brevet US 2018/180734, qui divulgue un appareil d'observation comprenant deux canaux d'observation et deux canaux d'émission/réception d'un laser.

### RESUME DE L'INVENTION

Un objet consiste à pallier ces inconvénients, et plus particulièrement à fournir des moyens d'observation peu encombrants.

Un autre objet consiste à fournir des moyens d'observation portatifs légers.

Encore un autre objet consiste à fournir des moyens d'observation dont la consommation en énergie est réduite.

Selon un aspect, il est proposé un système d'observation, comprenant : une voie optique principale apte à recevoir un premier rayonnement optique émis par une scène à observer et comprenant un capteur principal configuré pour élaborer une image numérique à partir du premier rayonnement optique ; et un émetteur configuré pour émettre un deuxième rayonnement optique du domaine de l'infrarouge.

La voie optique principale comporte un élément optique configuré pour transmettre une partie du premier rayonnement optique vers le capteur principal et pour transmettre le deuxième rayonnement optique vers la scène à observer.

Ainsi, on fournit un système d'observation compact qui permet d'illuminer une scène à observer. L'émetteur peut comporter un amplificateur configuré pour émettre le deuxième rayonnement optique de type laser.

Le deuxième rayonnement optique peut être du type impulsionnel, le système comprenant en outre un récepteur configuré pour recevoir une partie du deuxième rayonnement optique impulsionnel renvoyée par la scène à observer et une unité de contrôle électronique configurée pour déterminer une distance par rapport à la scène à observer à partir de la partie du deuxième rayonnement optique impulsionnel renvoyée.

Ainsi, on fournit un système d'observation compact qui permet à la fois d'illuminer la scène à observer et d'effectuer une mesure d'une distance entre la scène et le système d'observation.

Le système peut comprendre un connecteur optique configuré pour transmettre le deuxième rayonnement optique et une fibre optique reliant le connecteur optique à l'émetteur.

La fibre optique peut comprendre une première partie reliant le connecteur optique à l'émetteur, et une deuxième partie reliant le connecteur optique au récepteur.

Le système peut comprendre, en outre, une deuxième voie optique comportant un oculaire et conformée pour transmettre une autre partie du premier rayonnement optique transmise par l'élément optique vers l'oculaire.

Ainsi, la deuxième voie optique permet une observation directe de la scène adaptée pour une vision de jour en l'absence de batterie, et permet de limiter la consommation des capteurs.

Le système peut également comprendre un ensemble optique comprenant l'élément optique, et dans lequel le capteur principal et le connecteur optique sont montés fixes sur l'ensemble optique.

L'ensemble optique peut comporter un système optique configuré pour transmettre l'autre partie du premier rayonnement optique vers l'oculaire, l'ensemble optique formant un ensemble monobloc.

Un tel ensemble monobloc rend le système particulièrement compact et peu encombrant. Avantageusement, l'ensemble optique comporte un réticule de visée.

Selon un autre aspect, il est proposé un procédé d'observation, comprenant : une réception d'un premier rayonnement optique émis par une scène à observer à partir d'une voie optique principale munie d'un capteur principal élaborant une image numérique à partir du premier rayonnement optique; et une émission d'un deuxième rayonnement optique du domaine de l'infrarouge.

Le procédé comporte une transmission d'une partie du premier rayonnement optique vers le capteur principal et une transmission à partir de la voie optique principale du deuxième rayonnement optique vers la scène à observer.

Le deuxième rayonnement optique peut être du type impulsionnel, et le procédé comprend une réception d'une partie du deuxième rayonnement optique impulsionnel renvoyée par la scène à observer et une détermination d'une distance par rapport à la scène à observer à partir de la partie du deuxième rayonnement optique impulsionnel renvoyée.

Selon un autre aspect, il est proposé un procédé de fabrication d'un système d'observation, comprenant une fourniture d'une voie optique principale apte à recevoir un premier rayonnement optique émis par une scène à observer et comprenant un capteur principal configuré pour élaborer une image numérique à partir du premier rayonnement optique, et une fourniture d'un émetteur configuré pour émettre un deuxième rayonnement optique du domaine de l'infrarouge.

Le procédé comporte un montage, dans la voie optique principale, d'un élément optique transmettant une partie du premier rayonnement optique vers le capteur principal et transmettant le deuxième rayonnement optique vers la scène à observer.

Le procédé peut comprendre un montage de l'élément optique au sein d'un ensemble optique, et un montage du capteur principal sur l'ensemble optique.

Le procédé peut également comprendre un montage d'une fibre optique sur un connecteur optique pour transmettre le deuxième rayonnement optique et pour recevoir la partie du rayonnement optique impulsionnel renvoyée, et un montage du connecteur optique sur l'ensemble optique.

Le connecteur optique peut comporter un prisme optique et une férule reliant la fibre optique au prisme optique, et l'étape du montage du connecteur optique comporte un réglage d'une position du connecteur optique le long d'un axe parallèle à un axe longitudinal de la férule. L'étape du montage du connecteur optique peut comporter un réglage d'une position du connecteur optique le long d'un axe perpendiculaire à l'axe longitudinal de la férule.

Le procédé peut également comprendre, avant l'étape de montage du connecteur optique, un montage d'un réticule de visée sur l'ensemble optique.

Avantageusement, le procédé comprend, après l'une au moins des étapes de réglage, une fixation du connecteur optique sur l'ensemble optique.

### BRÈVE DESCRIPTION DE LA FIGURE

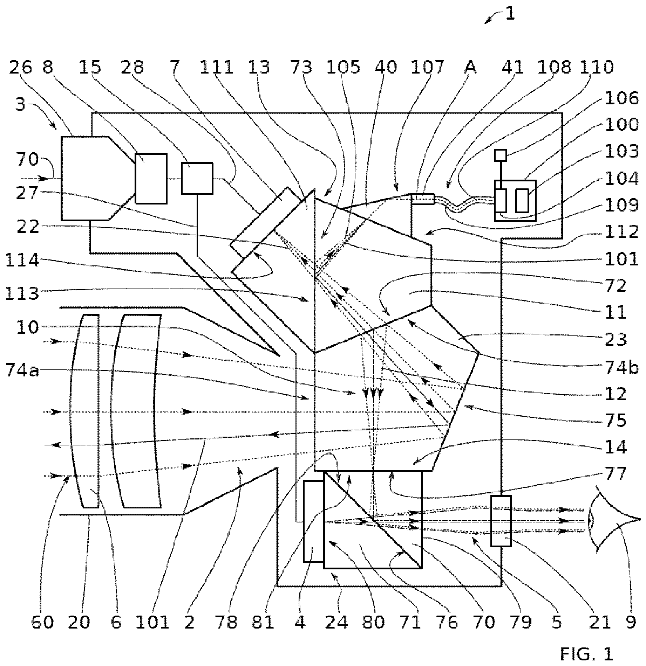

D'autres avantages et caractéristiques ressortiront plus clairement de la description qui va suivre de modes particuliers de réalisation et de mise en œuvre de l'invention donnés à titre d'exemples non limitatifs et représentés au dessin annexé, dans lequel
La figure 1 illustre schématiquement un mode de réalisation d'un système d'observation selon l'invention.

Le dessin est donné à titre d'exemple et n'est pas limitatif de l'invention. Il constitue une représentation schématique de principe destinée à faciliter la compréhension de l'invention et n'est pas nécessairement à l'échelle des applications pratiques.

### DESCRIPTION DÉTAILLÉE

Sur la figure 1, on a représenté un système d'observation 1 d'une scène. De manière générale, le système 1 comprend une voie optique principale 2, et un émetteur 100. Avantageusement, le système d'observation 1 est portatif, c'est-à-dire qui peut être transporté à la main par un utilisateur. En outre, la voie optique principale 2, appelée également première voie optique, est apte à recevoir un premier rayonnement optique 60 émis par une scène à observer, non représentée sur la figure 1 à des fins de simplification. On entend par rayonnement optique, un rayonnement électromagnétique comprenant les domaines de l'ultraviolet, du visible et de l'infrarouge. La scène à observer peut être située à l'extérieur, comme à l'intérieur d'un bâtiment. La voie optique principale 2 comporte un capteur principal 7 configuré pour élaborer une image numérique à partir du premier rayonnement optique 60. Le capteur principal 7 est un dispositif électronique, il est alimenté par une batterie, non représentée sur la figure 1 à des fins de simplification. L'émetteur 100 est configuré pour émettre un deuxième rayonnement optique 101 du domaine de l'infrarouge. De préférence, le deuxième rayonnement optique 101 a une longueur d'onde dans le domaine du proche infrarouge. Encore préférentiellement le deuxième rayonnement optique a une longueur d'onde supérieure ou égale à 700 nanomètres. Par exemple, la longueur d'onde du deuxième rayonnement optique 101 peut être comprise entre 700 et 2000 nanomètres. De manière générale, l'émetteur 100 permet d'illuminer la scène à observer en émettant le deuxième rayonnement optique 101. En particulier, la voie optique principale 2 comporte un élément optique 11 configuré pour transmettre une partie 22 du premier rayonnement optique 60 vers le capteur principal 7 et pour transmettre le deuxième rayonnement optique 101 vers la scène à observer. En d'autres termes, l'émission du deuxième rayonnement optique 100 est effectué à partir de la voie optique principale 2. On entend par élément optique, un élément permettant de modifier la trajectoire d'un rayonnement optique ou les propriétés du rayonnement optique, tels qu'un miroir, une lentille, un réseau de diffraction, un prisme, etc. La voie optique principale 2 peut en outre comporter un dispositif optique 6, telle une lentille, configuré pour transmettre le premier rayonnement optique 60 vers le capteur principal 7. Dans ce cas, l'élément optique 11 est configuré pour transmettre le deuxième rayonnement optique 101 vers le dispositif optique 6, et le dispositif optique 6 est configuré pour transmettre le deuxième rayonnement optique 101 vers la scène à observer. En particulier, le dispositif optique 6 est transparent aux rayonnements optiques.

L'émetteur 100 peut comporter un amplificateur 103 configuré pour émettre le deuxième rayonnement optique 101 de type laser. Ainsi, on fournit une illumination de la scène avec un point laser qui peut être observé par un système d'observation sensible aux infrarouges.

Par ailleurs, l'émetteur 100 est configuré pour émettre un deuxième rayonnement optique 101 de longueur d'onde du domaine de l'infrarouge du type impulsionnel. Le système 1 comporte en outre un récepteur 104 configuré pour recevoir une partie 105 du deuxième rayonnement optique impulsionnel 101 renvoyée par la scène à observer. Le système comprend également une unité de contrôle électronique 106, par exemple un microprocesseur, configurée pour déterminer une distance par rapport à la scène à observer à partir de la partie 105 du rayonnement optique impulsionnel 101 renvoyée. En d'autres termes, la détermination de la distance est réalisée en émettant sur la scène à observer une série d'impulsions laser de courte durée, puis en collectant l'énergie rétrodiffusée par la scène illuminée. La mesure du temps de vol permet ensuite d'en déduire la distance parcourue par le deuxième rayonnement optique 101, et donc la distance entre la scène et le système d'observation 1.

La batterie permet d'alimenter l'émetteur 100, l'amplificateur 103, le récepteur 104 et l'unité de contrôle électronique 106.

Avantageusement, le système d'observation 1 comprend un connecteur optique 107 et une fibre optique 108. La fibre optique 108 comporte une première partie 109 reliant le connecteur optique 107 à l'émetteur 100, et une deuxième partie 110 reliant le connecteur optique 107 au récepteur 104. Préférentiellement, la première partie 109 correspond à une partie centrale de la fibre optique 108, et la deuxième partie 110 correspond à une gaine qui entoure la partie centrale 109. Les première et deuxième parties 109, 110 de la fibre optique 108 sont configurées pour permettre la propagation d'un rayonnement optique, en particulier un rayonnement optique du domaine de l'infrarouge.

Le connecteur optique 107 est configuré pour transmettre le deuxième rayonnement optique 101. Par exemple, le connecteur optique 107 comporte un prisme optique 40, de préférence un prisme droit, et une férule 41 reliant la fibre optique 108 au prisme optique 40. Ainsi, le deuxième rayonnement optique 101 émis par l'émetteur 100 se propage dans la première partie 109 de la fibre optique 108, et la deuxième partie 110 de la fibre optique 108 permet de recevoir la partie 105 du rayonnement optique impulsionnel 101 renvoyée.

Le prisme optique 40 peut être collé sur la férule 41. De préférence, un espace libre de colle, par exemple une couche d'air ou un espace vide, est créé entre la férule 41 et le prisme optique 40 de manière à éviter qu'une émission laser du deuxième rayonnement optique 101 traverse une couche de colle.

Ainsi, on peut utiliser la fibre optique 108 pour déterminer la distance de la scène à observer. En particulier, l'utilisation de la fibre optique 108 permet de juxtaposer la réception et l'émission du deuxième rayonnement optique 101 pour déterminer la distance, ce qui réduit l'encombrement du système d'observation 1.

Par ailleurs, lorsqu'on souhaite illuminer la scène à observer, à partir d'un rayonnement du type laser, l'émetteur 100 amplifie le deuxième rayonnement optique 101, à l'aide de l'amplificateur 103, qui se propage dans la première partie 109 de la fibre optique 108 vers le connecteur optique 107.

Ainsi, le connecteur optique 107 fournit une seule interface optique pour l'émission et la réception du deuxième rayonnement optique 101 en vue de déterminer une distance, et pour l'émission d'un rayonnement de type laser pour une illumination de la scène à observer.

Avantageusement, le système d'observation 1 peut comprendre une deuxième voie optique 5 comportant un oculaire 21 et conformée pour transmettre une autre partie 12 du premier rayonnement optique 60 transmise par l'élément optique 11 vers l'oculaire 21. Ainsi, on peut observer directement la scène. Plus particulièrement, le système 1 comporte une troisième voie optique 10 reliant la voie optique principale 2 à la deuxième voie optique 5. L'élément optique 11 est en outre configuré pour transmettre l'autre partie 12 du premier rayonnement optique 60 vers la troisième voie optique 10. En d'autres termes, l'élément optique 11 est configuré pour laisser passer une première partie 22 du premier rayonnement 60 vers le capteur principal 7, pour réfléchir une deuxième partie 12 du premier rayonnement optique 60 vers la troisième voie optique 10 et pour transmettre le deuxième rayonnement optique 101 vers le dispositif optique 6. L'élément optique 11 peut être un prisme. On entend par prisme, un bloc de verre taillé comprenant au moins cinq faces, ou dioptres. De préférence, l'élément optique 11 comporte un dioptre d'entrée 72 transparent aux rayonnements optiques du type infrarouge, et semi-réfléchissant pour les rayonnements optiques du domaine visible. Un rayonnement optique du type infrarouge a une longueur d'onde comprise entre 0,75 micromètre et 100 micromètres, un rayonnement optique du domaine du visible a une longueur d'onde comprise entre 380 nanomètres et 750 nanomètres. L'oculaire 21 permet de visualiser la deuxième partie 12 du premier rayonnement optique 60. Ainsi on fournit un système d'observation 1 qui permet à l'œil 9 de l'utilisateur de visualiser directement le premier rayonnement optique 60 du domaine du visible émis par la scène à observer. Le système 1 peut également comprendre un afficheur 4 pour afficher, par la deuxième voie optique 5, l'image numérique issue du capteur principal 7. L'afficheur 4 peut être directement couplé au capteur principal 7, par une connexion 28.

Avantageusement, le système 1 comporte un ensemble optique 13 comprenant au moins l'élément optique 11. L'ensemble optique 13 peut en outre comprendre d'autres éléments optiques. Ces autres éléments optiques sont notés systèmes optiques 23, 24, 111. L'élément optique 11 et les systèmes optiques 23, 24, 111 peuvent être des prismes et l'ensemble optique 13 est alors un ensemble prismatique, c'est-à-dire un ensemble de prismes. L'ensemble optique 13 est une structure particulièrement simple et rigide et permet de simplifier tout en allégeant le système d'observation 1. Par exemple, l'ensemble optique 13 comporte l'élément optique 11, un premier système optique 23 couplé à l'élément optique 11, un deuxième système optique 24 couplé au premier système optique 23 et un troisième système optique 111 couplé à l'élément optique 11. De façon générale, on entend par deux éléments optiques couplés entre eux, deux éléments optiques qui sont en contact l'un avec l'autre. Ils peuvent être montés fixes, ou amovibles, l'un sur l'autre. Dans ce mode de réalisation, l'élément optique 11, les premier et troisième systèmes optiques 23, 111 sont respectivement trois prismes et le deuxième système optique 24 comporte deux prismes 70, 71.

L'élément optique 11 comporte le dioptre d'entrée 72, un premier dioptre de sortie 73 et un deuxième dioptre de sortie 112. Le premier dioptre de sortie 73 est un dioptre transparent aux rayonnements optique de longueur d'onde du visible, et réfléchissant aux rayonnements optiques de longueur d'onde de l'infrarouge. Le deuxième dioptre de sortie 112 est neutre et est couplé au prisme optique 40 du connecteur optique 107. On entend par dioptre neutre, un dioptre transparent qui laisse passer les rayonnements optiques. Le dioptre d'entrée 72 est un miroir semi-réfléchissant pour les rayonnements optiques de longueur d'onde du visible et transparent aux rayonnements optiques de longueur d'onde de l'infrarouge. Le dioptre d'entrée 72 transmet la première partie 22 du premier rayonnement 60 vers le capteur principal 7, via le premier dioptre de sortie 73, et la deuxième partie 12 du premier rayonnement optique vers la troisième voie optique 10. Le premier dioptre de sortie 73 transmet, par réflexion, le deuxième rayonnement optique 101 vers le dioptre d'entrée 72 et transmet, par réflexion, la partie 13 du deuxième rayonnement optique 101 vers le prisme optique 40, via le deuxième dioptre de sortie 112. Par ailleurs, le troisième système optique 111 transmet la première partie 22 du premier rayonnement 60 vers le capteur principal 7. Le troisième système optique 111 comporte un dioptre d'entrée 113 neutre couplé au premier dioptre de sortie 73 et un dioptre de sortie neutre 114 couplé au capteur principal 7.

Le premier système optique 23 est configuré pour transmettre la deuxième partie 12 du premier rayonnement optique 60 de la troisième voie optique 10 vers la deuxième voie optique 5. Le premier système optique 23 comporte un premier dioptre d'entrée 74a neutre pour recevoir le premier rayonnement optique 60 et pour laisser passer les rayonnements optiques de longueur d'onde de l'infrarouge 101, 13. Le premier système optique 23 comporte en outre un deuxième dioptre d'entrée 74b neutre couplé au dioptre d'entrée 72 de l'élément optique 11 pour recevoir la deuxième partie 12 du rayonnement. Par ailleurs, le premier système optique 23 comporte un dioptre de sortie 76 neutre et un dioptre intermédiaire 75 réfléchissant les rayonnements optiques 101, 13, 60.

Le deuxième système optique 24 a pour rôle d'établir une fusion optique entre l'image numérique issue de l'afficheur 4 et la deuxième partie 12 du premier rayonnement optique 60 issu de la scène à observer. En d'autres termes, le deuxième système optique 24 est configuré pour transmettre la deuxième partie 12 du premier rayonnement optique 60 vers l'oculaire 21 et pour transmettre l'image numérique vers l'oculaire 21. Le deuxième système optique 24 est un séparateur optique. Il comporte un premier prisme 70 ayant un dioptre d'entrée 77 neutre couplé au dioptre de sortie 76 du premier système optique 23, un dioptre intermédiaire 78 semi-réfléchissant pour transmettre une partie de la deuxième partie 12 de rayonnement vers un dioptre de sortie 79, neutre, correspondant à un dioptre de sortie de l'ensemble optique 13. Ce dioptre de sortie 79 transmet les rayonnements issus de la scène à observer et l'image numérique vers l'oculaire 21, afin de pouvoir observer la scène et l'image numérique. En outre, le deuxième système optique 24 comporte un deuxième prisme 71 ayant un dioptre d'entrée 80 neutre couplé à l'afficheur 4 et un dioptre de sortie 81 neutre couplé au dioptre intermédiaire 78 du premier prisme 70. Ainsi, le deuxième prisme 71 permet de transmettre l'image numérique vers le dioptre de sortie 79 de l'ensemble optique 13. La deuxième voie optique 5 comprend le deuxième système optique 24 et permet d'observer la scène à partir du premier rayonnement optique 60 et de l'image numérique affichée par l'afficheur 4. Un tel ensemble optique 13 permet de rendre le système d'observation 1 suffisamment compact.

Avantageusement les prismes 11, 23, 70, 71, 111 de l'ensemble optique 13 peuvent être collés entre eux pour former un ensemble optique 13 monobloc. Selon encore un autre avantage, d'autres éléments 4, 7, 14, 40 peuvent être montés fixes sur l'ensemble optique 13. Par ailleurs, lorsque les éléments 4, 7, 14, 40 sont montés fixes sur un ensemble optique 13 monobloc, l'ensemble optique 13 monobloc et les éléments 4, 7, 14, 40 fixés forment un ensemble monobloc 50. On entend par monobloc, un ensemble d'éléments fixés entre eux de sorte que le retrait d'un des éléments de l'ensemble entraîne une destruction mécanique de l'ensemble. Ainsi, on fournit un ensemble monobloc 50 qui empêche un mouvement relatif entre les éléments de l'ensemble 50, qui peuvent avoir lieu, par exemple lors de chocs ou de vibrations. On dit également que l'ensemble monobloc 50 à un rôle d'invariant optique. Avantageusement, le premier capteur 7, l'afficheur 4 et le prisme optique 40 du connecteur optique 107 sont montés fixes sur l'ensemble optique 13 monobloc.

Cela permet de rendre robuste une harmonisation des première, deuxième et troisième voies optiques 2, 5, 10 à tous déplacements relatifs entre les différents éléments des voies optiques, en particulier les déplacements par rapport à un objectif 20 situé en entrée de la première voie optique 2 ou à l'oculaire 21 situé en sortie de la deuxième voie optique 5. L'ensemble monobloc 50 permet de superposer l'image numérique issue de l'afficheur 4 à l'image de la scène issue de la troisième voie optique 10, c'est-à-dire la deuxième partie 12 du premier rayonnement optique 60, sans décalage entre les champs. La superposition d'images est également notée fusion optique. L'ensemble monobloc 50 permet une harmonisation robuste, en maintenant une harmonisation lors de chocs et de vibrations éventuels. En d'autres termes, l'ensemble monobloc 50 permet de minimiser le risque de désharmonisation.

Avantageusement, l'ensemble optique 13 peut comporter un réticule de visée 14. Plus particulièrement, la troisième voie optique 10 comporte le réticule de visée 14. Par exemple, le réticule 14 est une figure déposée sur une surface d'un verre par sérigraphie ou photolithographie. Le réticule 14 peut également être fait de fils tendus. On peut ainsi superposer une figure sur l'image de la scène à observer. Le réticule de visée 14 peut être monté sur l'ensemble optique 13, de préférence de manière fixe pour faire alors partie de l'ensemble monobloc 50. Cela permet de rendre robuste l'harmonisation des première, deuxième et troisième voies optiques 2, 5, 10 avec le réticule de visée 14 à tous déplacements relatifs entre les différents éléments de ces voies optiques 2, 5, 10. Avantageusement, le réticule de visée 14 est monté fixe sur le dioptre de sortie 76 du premier système optique 23.

Selon une variante, l'afficheur 4 peut être configuré pour afficher un réticule de visée dans la deuxième voie optique 5. Par exemple, le réticule de visée peut être une croix, un cercle ou plus généralement une figure permettant d'identifier la localisation sur la scène du deuxième rayonnement optique 101. Ainsi, lorsque l'afficheur 4 est monté fixe sur l'ensemble optique 13, par exemple sur le dioptre d'entrée 80 du deuxième système optique 24, on harmonise les première, deuxième et troisième voies optiques 2, 5, 10 avec le réticule de visée affiché.

Le système 1 peut également comprendre une quatrième voie optique 3 apte à recevoir un troisième rayonnement optique 70 émis par la scène et comporte un deuxième capteur 8 configuré pour élaborer une image numérique à partir du troisième rayonnement optique 70. Le deuxième capteur 8 est également alimenté par la batterie. Avantageusement, le système 1 comporte une unité de traitement d'images 15 couplée au capteur principal 7, par la connexion 28, et couplée à l'afficheur 4 par une connexion 27. La batterie permet également d'alimenter l'unité de traitement d'images 15 et l'afficheur 4. L'unité de traitement d'images 15 est par exemple un microprocesseur. L'unité de traitement d'images 15 est configurée pour élaborer une image numérique à partir des images numériques issues respectivement du capteur principal 7 et du deuxième capteur 8. Par exemple, l'image numérique est élaborée à partir d'une fusion numérique entre les images numériques issues respectivement du capteur principal 7 et du deuxième capteur 8. L'unité de traitement d'images 15 est couplée, au premier capteur 7 par une connexion 16, et au deuxième capteur 8 par une connexion 17. En outre, l'unité de traitement d'images 15 est couplée à l'afficheur 4, par une connexion 18, pour transmettre la troisième image numérique à l'afficheur 4.

L'afficheur 4 peut en outre être configuré pour afficher une image numérique à partir des images numériques issues respectivement du capteur principal 7 et du deuxième capteur 8. Par exemple, la première voie optique 2 peut être une voie d'observation numérique de jour, c'est-à-dire que le capteur principal 7 est sensible à la lumière visible. Avantageusement, la quatrième voie optique 3 peut être une voie d'observation numérique de nuit, c'est-à-dire que le deuxième capteur 8 est sensible à l'infrarouge, en particulier aux infrarouges dont la longueur d'onde est supérieure ou égale à 700 nm. Selon un autre mode de réalisation, le capteur principal 7 est sensible à la lumière infrarouge.

La quatrième voie optique 3 peut être harmonisée avec un traitement numérique d'images avec la première voie numérique 2, selon des techniques de traitement d'images classiques. Ainsi, après l'harmonisation numérique des première et deuxième voies numériques 2, 3, l'ensemble monobloc 50 permet d'harmoniser les première et deuxième voies numériques 2, 3 avec les deuxième et troisième voies optiques 5, 10.

Le système d'observation 1 comporte, avantageusement, un boîtier 19 au sein duquel sont logés les capteurs 7, 8, l'élément optique 11, l'afficheur 4, l'ensemble optique 13, le réticule 14, l'unité de traitement d'images 15, et la batterie. En outre, la première voie optique 2 peut comprendre l'objectif 20 monté sur le boîtier 19. La quatrième voie optique 3 peut comprendre également un objectif supplémentaire 26 monté sur le boîtier 19.

Par ailleurs, un procédé d'observation peut être mis en œuvre par le système d'observation 1 défini ci-avant. Le procédé comprend une réception d'un premier rayonnement optique 60 émis par une scène à observer à partir d'une voie optique principale 2 munie, d'un capteur principal 7 élaborant une image numérique à partir du premier rayonnement optique 60, la voie optique principale 2 comprenant un dispositif optique 6 pour transmettre le premier rayonnement optique 60 vers le capteur principal 7. Le procédé comprend en outre une émission d'un deuxième rayonnement optique 101 du domaine de l'infrarouge. Le procédé comprend une transmission d'une partie 22 du premier rayonnement optique 60 vers le capteur principal 7 et une transmission à partir de la voie optique principale 2 du deuxième rayonnement optique 101 vers la scène à observer.

Avantageusement le deuxième rayonnement optique 101 est du type impulsionnel, et le procédé comprend une réception d'une partie 105 du deuxième rayonnement optique impulsionnel 101 renvoyée par la scène à observer et une détermination d'une distance par rapport à la scène à observer à partir de la partie 105 du deuxième rayonnement impulsionnel 101 renvoyée.

Un procédé de fabrication du système d'observation 1 est décrit ci-après. Le procédé de fabrication comprend une fourniture de la voie optique principale 2 et une fourniture de l'émetteur 100. Par ailleurs, le procédé comporte un montage, dans la voie optique principale 2, de l'élément optique 11.

Avantageusement, le procédé comprend un montage de l'élément optique 11 au sein d'un ensemble optique 13, et un montage du capteur principal 7 de manière fixe sur l'ensemble optique 13.

Le procédé peut en outre comprendre un montage d'une fibre optique 108 sur un connecteur optique 107 pour transmettre le deuxième rayonnement optique 101 et pour recevoir la partie 105 du deuxième rayonnement optique 101 impulsionnel renvoyée. Puis le procédé comprend un montage du connecteur optique 107 sur l'ensemble optique 13.

Avantageusement, après avoir monté la férule 41 sur le prisme optique 40 du connecteur optique 107, l'étape du montage du connecteur optique 107 comporte un réglage d'une position du connecteur optique 107 le long d'un axe parallèle à un axe longitudinal A de la férule 41. Ce réglage permet d'optimiser l'émission et la réception du rayonnement optique impulsionnel pour déterminer la distance de la scène. Lors de ce réglage, la position du centre d'un point formé par le deuxième rayonnement optique 101 sur la scène de change pas mais le diamètre du point est modifié. A la différence des méthodes classiques, on ne cherche pas à placer le connecteur optique 107 dans une position où le diamètre du point est le plus faible possible. En effet, si le connecteur est placé dans cette position, la divergence de l'émission du deuxième rayonnement optique 101 est la plus faible et les photons de retour se propagent essentiellement au sein de la première partie 109 de la fibre optique 108. Ces photons sont alors perdus pour la mesure de distance, le couplage entre l'émission et la réception diminue et la mesure est moins précise. On positionne donc le connecteur optique 107 de manière à augmenter la divergence de l'émission du deuxième rayonnement optique 101 pour augmenter le diamètre du point et pour augmenter le nombre de photons de retour au sein de la deuxième partie 110 de la fibre optique 108. Ainsi, on améliore le couplage entre l'émission et la réception pour améliorer la précision de la mesure de distance.

L'étape du montage du connecteur optique 107 peut comporter un réglage d'une position du connecteur optique 107 le long d'un axe perpendiculaire à l'axe longitudinal A de la férule 41. Ce réglage permet d'harmoniser la position du point formé par le deuxième rayonnement optique 101 sur la scène avec le réticule de visée 14, c'est-à-dire de rapprocher le point au plus près de la scène visée par l'utilisateur. Le réglage est effectué de manière à minimiser l'écart relatif entre la position du point et la position du réticule de visée 14. Pour effectuer ce réglage, le réticule de visée 14 est illuminé par la partie inférieure de l'ensemble optique 13. En même temps, le deuxième rayonnement optique 101 est émis. Grâce à une lunette regardant à l'infini les faisceaux sortant du dispositif optique 6 vers la lunette, il est possible de visualiser en même temps le réticule de visée 14 et la position relative du point. La position du connecteur optique 107 est alors choisie de manière à diminuer l'écart, vue par la lunette, entre le point et le réticule de visée 14. Les deux réglages précités peuvent être effectués de manière séquentielle, l'un après l'autre. En effectuant les réglages selon deux axes perpendiculaires entre eux, il y a peu d'influence d'un réglage sur l'autre.

Le procédé peut comprendre, après l'une au moins des étapes de réglage, une fixation du connecteur optique 107 sur l'ensemble optique 13.

## Revendications

1. Système d'observation, comprenant : une voie optique principale (2) apte à recevoir un premier rayonnement optique (60) émis par une scène à observer et comprenant un capteur principal (7) configuré pour élaborer une image numérique à partir du premier rayonnement optique (60) ; et un émetteur (100) configuré pour émettre un deuxième rayonnement optique (101) du domaine de l'infrarouge ; la voie optique principale (2) comportant un élément optique (11) configuré pour transmettre une partie (22) du premier rayonnement optique (60) vers le capteur principal (7) et pour transmettre le deuxième rayonnement optique (101) vers la scène à observer, le système d'observation comprenant un connecteur optique (107) configuré pour transmettre le deuxième rayonnement optique (101), une fibre optique (108) reliant le connecteur optique (107) à l'émetteur (100) et une deuxième voie optique (5) comportant un oculaire (21) et conformée pour transmettre une autre partie (12) du premier rayonnement optique (60) transmise par l'élément optique (11) vers l'oculaire (21), **caractérisé en ce que** le système d'observation comporte un ensemble optique (13) comportant l'élément optique (11), et dans lequel le capteur principal (7) et le connecteur optique (107) sont montés fixes sur l'ensemble optique (13).

2. Système selon la revendication 1, dans lequel l'émetteur (100) comporte un amplificateur (103) configuré pour émettre le deuxième rayonnement optique (101) de type laser.

3. Système selon l'une quelconque des revendications précédentes, dans lequel le deuxième rayonnement optique (101) est du type impulsionnel, le système comprenant en outre un récepteur (104) configuré pour recevoir une partie (105) du deuxième rayonnement optique (101) impulsionnel renvoyée par la scène à observer et une unité de contrôle électronique (106) configurée pour déterminer une distance par rapport à la scène à observer à partir de la partie (105) du deuxième rayonnement optique (101) impulsionnel renvoyée.

4. Système selon l'une quelconque des revendications précédentes, dans lequel la fibre optique (108) comprend une première partie (109) reliant le connecteur optique (107) à l'émetteur (100), et une deuxième partie (110) reliant le connecteur optique (107) au récepteur (104).

5. Système selon l'une quelconque des revendications précédentes, dans lequel l'ensemble optique (13) comporte un système optique (23) configuré pour transmettre l'autre partie (12) du premier rayonnement optique (60) vers l'oculaire (21), l'ensemble optique (13) formant un ensemble monobloc (50).

6. Système selon l'une quelconque des revendications précédentes, dans lequel l'ensemble optique (13) comporte un réticule de visée (14).

7. Procédé de fabrication d'un système d'observation, comprenant une fourniture d'une voie optique principale (2) apte à recevoir un premier rayonnement optique (60) émis par une scène à observer et comprenant un capteur principal (7) configuré pour élaborer une image numérique à partir du premier rayonnement optique (60), une fourniture d'un émetteur (100) configuré pour émettre un deuxième rayonnement optique (101) du domaine de l'infrarouge, et un montage, dans la voie optique principale (2), d'un élément optique (11) transmettant une partie (22) du premier rayonnement optique (60) vers le capteur principal (7) et transmettant le deuxième rayonnement optique (101) vers la scène à observer, **caractérisé en ce que** le procédé de fabrication comprend un montage de l'élément optique (11) au sein d'un ensemble optique (13), un montage du capteur principal (7) sur l'ensemble optique (13), un montage d'une fibre optique (108) sur un connecteur optique (107), et un montage du connecteur optique (107) sur l'ensemble optique (13).

8. Procédé selon la revendication 7, dans lequel, le connecteur optique (107) comporte un prisme optique (40) et une férule (41) reliant la fibre optique (108) au prisme optique (40), et l'étape du montage du connecteur optique (107) comporte un réglage d'une position du connecteur optique (107) le long d'un axe parallèle à un axe longitudinal (A) de la férule (41).

9. Procédé selon la revendication 8, dans lequel, l'étape du montage du connecteur optique (107) comporte un réglage d'une position du connecteur optique (107) le long d'un axe perpendiculaire à l'axe longitudinal (A) de la férule (41).

10. Procédé selon la revendication 9, comprenant, avant l'étape de montage du connecteur optique (107), un montage d'un réticule de visée (14) sur l'ensemble optique (13).

11. Procédé selon l'une des revendications 8 à 10, comprenant après l'une au moins des étapes de réglage, une fixation du connecteur optique (107) sur l'ensemble optique (13).

## Patentansprüche

1. Beobachtungssystem, umfassend: einen primären optischen Weg (2), der geeignet ist, eine erste optische Strahlung (60) zu empfangen, die von einer zu beobachtenden Szene ausgestrahlt wird, und umfassend einen primären Sensor (7), der so eingerichtet ist, dass er aus der ersten optischen Strahlung (60) ein digitales Bild erstellt; und einen Sender (100), der so eingerichtet ist, dass er eine zweite optische Strahlung (101) des Infrarotbereichs ausstrahlt; wobei der primäre optische Weg (2) ein optisches Element (11) umfasst, das so eingerichtet ist, dass es einen Teil (22) der ersten optischen Strahlung (60) an den primären Sensor (7) überträgt und um die zweite optische Strahlung (101) an die zu beobachtende Szene zu übertragen, wobei das Beobachtungssystem einen optischen Anschluss (107) umfasst, der so eingerichtet ist, dass er die zweite optische Strahlung (101) überträgt, eine optische Faser (108), die den optischen Anschluss (107) mit dem Sender (100) verbindet, und einen zweiten optischen Weg (5), der ein Okular (21) aufweist, und so ausgebildet ist, dass es einen anderen Teil (12) der von dem optischen Element (11) zu dem Okular (21) übertragenen ersten optischen Strahlung (60) überträgt, **dadurch gekennzeichnet, dass** das Beobachtungssystem eine optische Baugruppe (13) aufweist, die das optische Element (11) aufweist, und wobei der primäre Sensor (7) und der optische Anschluss (107) fest an der optischen Baugruppe (13) montiert sind.

2. System nach Anspruch 1, wobei der Sender (100) einen Verstärker (103) aufweist, der so eingerichtet ist, dass er die zweite optische Strahlung (101) vom Lasertyp ausstrahlt.

3. System nach einem der vorhergehenden Ansprüche, wobei die zweite optische Strahlung (101) vom Impulstyp ist, wobei das System ferner einen Empfänger (104), der so eingerichtet ist, dass er einen Teil (105) der von der zu beobachtenden Szene zurückgeworfenen zweiten gepulsten optischen Strahlung (101) empfängt, und eine elektronische Steuereinheit (106) umfasst, die so eingerichtet ist, dass sie anhand des Teils (105) der zurückgeworfenen zweiten gepulsten optischen Strahlung (101) einen Abstand zu der zu beobachtenden Szene bestimmt.

4. System nach einem der vorhergehenden Ansprüche, wobei die optische Faser (108) einen ersten Teil (109) umfasst, der den optischen Anschluss (107) mit dem Sender (100) verbindet, und einen zweiten Teil (110), der den optischen Anschluss (107) mit dem Empfänger (104) verbindet.

5. System nach einem der vorhergehenden Ansprüche, wobei die optische Baugruppe (13) ein optisches System (23) aufweist, das so eingerichtet ist, dass es den anderen Teil (12) der ersten optischen Strahlung (60) zu dem Okular (21) überträgt, wobei die optische Baugruppe (13) eine einteilige Baugruppe (50) bildet.

6. System nach einem der vorhergehenden Ansprüche, wobei die optische Baugruppe (13) ein Zielkreuz (14) aufweist.

7. Verfahren zur Herstellung eines Beobachtungssystems, umfassend das Bereitstellen eines primären optischen Wegs (2), der geeignet ist, eine erste optische Strahlung (60) zu empfangen, die von einer zu beobachtenden Szene ausgestrahlt wird, und umfassend einen primären Sensor (7), der so eingerichtet ist, dass er aus der ersten optischen Strahlung (60) ein digitales Bild erstellt, das Bereitstellen eines Senders (100), der so eingerichtet ist, dass er eine zweite optische Strahlung (101) des Infrarotbereichs ausstrahlt, und ein Montieren, in dem primären optischen Weg (2), eines optischen Elements (11), das einen Teil (22) der ersten optischen Strahlung (60) an den primären Sensor (7) überträgt und die zweite optische Strahlung (101) an die zu beobachtende Szene überträgt, **dadurch gekennzeichnet, dass** das Verfahren zur Herstellung ein Montieren des optischen Elements (11) innerhalb einer optischen Baugruppe (13), ein Montieren des primären Sensors (7) an der optischen Baugruppe (13), ein Montieren einer optischen Faser (108) an einem optischen Anschluss (107) und ein Montieren des optischen Anschlusses (107) an der optischen Baugruppe (13) umfasst.

8. Verfahren nach Anspruch 7, wobei der optische Anschluss (107) ein optisches Prisma (40) und eine Schiene (41) aufweist, die die optische Faser (108) mit dem optischen Prisma (40) verbindet, und der Schritt des Montierens des optischen Anschlusses (107) ein Einstellen einer Position des optischen Anschlusses (107) entlang einer Achse parallel zu einer Längsachse (A) der Schiene (41) aufweist.

9. Verfahren nach Anspruch 8, wobei der Schritt der Montage des optischen Anschlusses (107) eine Einstellung einer Position des optischen Anschlusses (107) entlang einer Achse senkrecht zur Längsachse (A) der Schiene (41) umfasst.

10. Verfahren nach Anspruch 9, umfassend, vor dem Schritt des Montierens des optischen Anschlusses (107), ein Montieren eines Zielkreuzes (14) an der optischen Baugruppe (13).

11. Verfahren nach einem der Ansprüche 8 bis 10, umfassend nach mindestens einem der Schritte des Einstellens ein Befestigen des optischen Anschlusses (107) an der optischen Baugruppe (13).

## Claims

1. Observation system comprising: a main optical path (2) capable of receiving a first optical radiation (60) emitted by a scene to be observed and comprising a main sensor (7) configured to devise a digital image from the first optical radiation (60); and an emitter (100) configured to emit a second optical radiation (101) of the infrared domain; the main optical path (2) comprising an optical element (11) configured to transmit a portion (22) of the first optical radiation (60) to the main sensor (7) and to transmit the second optical radiation (101) to the scene to be observed, the observation system comprising an optical connector (107) configured to transmit the second optical radiation (101), an optical fibre (108) connecting the optical connector (107) to the emitter (100), and a second optical path (5) including an eyepiece (21) and shaped to transmit another portion (12) of the first optical radiation (60) transmitted by the optical element (11) to the eyepiece (21), **characterised in that** the observation system comprises an optical assembly (13) comprising the optical element (11), and wherein the main sensor (7) and the optical connector (107) are fixedly mounted on the optical assembly (13).

2. System according to claim 1, wherein the emitter (100) comprises an amplifier (103) configured to emit the second laser-type optical radiation (101).

3. System according to any one of the preceding claims, wherein the second optical radiation (101) is of the pulsed type, the system furthermore comprising a receiver (104) configured to receive a portion (105) of the second pulsed optical radiation (101) returned by the scene to be observed, and an electronic control unit (106) configured to determine a distance to the scene to be observed based on the returned portion (105) of the second pulsed optical radiation (101).

4. System according to any one of the preceding claims, wherein the optical fibre (108) comprises a first portion (109) connecting the optical connector (107) to the emitter (100), and a second portion (110) connecting the optical connector (107) to the receiver (104).

5. System according to any one of the preceding claims, wherein the optical assembly (13) comprises an optical system (23) configured to transmit the other portion (12) of the first optical radiation (60) to the eyepiece (21), the optical assembly (13) forming a one-piece assembly (50).

6. System according to any one of the preceding claims, wherein the optical assembly (13) comprises a viewing reticle (14).

7. Method for manufacturing an observation system, comprising the provision of a main optical path (2) capable of receiving a first optical radiation (60) emitted by a scene to be observed and comprising a main sensor (7) configured to devise a digital image from the first optical radiation (60), the provision of an emitter (100) configured to emit a second optical radiation (101) of the infrared domain, and a mounting, in the main optical path (2), of an optical element (11) transmitting a portion (22) of the first optical radiation (60) to the main sensor (7) and transmitting the second optical radiation (101) to the scene to be observed, **characterised in that** the manufacturing method comprises mounting the optical element (11) within an optical assembly (13), mounting the main sensor (7) on the optical assembly (13), mounting an optical fibre (108) on an optical connector (107), and mounting the optical connector (107) on the optical assembly (13).

8. Method according to claim 7, wherein the optical connector (107) comprises an optical prism (40) and a ferrule (41) connecting the optical fibre (108) to the optical prism (40), and the step of mounting the optical connector (107) comprises adjusting a position of the optical connector (107) along an axis parallel to a longitudinal axis (A) of the ferrule (41).

9. Method according to claim 8, wherein the step of mounting the optical connector (107) comprises adjusting a position of the optical connector (107) along an axis perpendicular to the longitudinal axis (A) of the ferrule (41).

10. Method according to claim 9, comprising, before the step of mounting the optical connector (107), mounting a viewing reticle (14) on the optical assembly (13).

11. Method according to any one of claims 8 to 10, comprising, after at least one of the adjustment steps, attaching the optical connector (107) to the optical assembly (13).
